# EUROPÄISCHE PATENTSCHRIFT

(11) **EP 0 826 708 B1**
(45) Veröffentlichungstag und Bekanntmachung des Hinweises auf die Patenterteilung: **05.11.2003**
(21) Anmeldenummer: 97114241.9
(22) Anmeldetag: 18.08.1997
(51) Int. Cl.: C08G 18/50, C08G 18/66, C08G 18/48

(54) **Verfahren zur Herstellung von Polyurethanhartschaumstoffen**
Process for the preparation of rigid polyurethane foams
Procédé de préparation de mousses rigides de polyuréthane

(30) Priorität: 28.08.1996 DE 19634700
(43) Veröffentlichungstag der Anmeldung: 04.03.1998
(60) Teilanmeldung: 00106008.6
(73) Patentinhaber: BAYER AG, 51368 Leverkusen (DE)
(72) Erfinder: Dietrich, Karl-Werner, Dr., 51519 Odenthal (DE); Heinemann, Torsten, Dr., 51065 Köln (DE); Dietrich, Manfred, Dr., 51373 Leverkusen (DE)

(56) Entgegenhaltungen:
- EP-A- 0 600 351
- DE-A- 19 502 969
- FR-A- 1 286 304
- US-A- 5 451 615

## Beschreibung

Die Erfindung betrifft ein Verfahren zur Herstellung von im wesentlichen geschlossenzelligen Polyurethanhartschaumstoffen.

Verfahren zur Herstellung von im wesentlichen geschlossenzelligen Urethan-, Harnstoff - und Biuretgruppen aufweisenden Hartschaumstoffen sind allgemein bekannt.

Eine Übersicht zur Herstellung entsprechender Hartschaumstoffe wird beispielsweise im Kunststoff-Handbuch, Band 7, 1. Auflage 1966, herausgegeben von R Vieweg und A. Höchtlen und 2. Auflage 1983, herausgegeben von G. Oertel, gegeben (Carl Hanser Verlag, München).

Zur Herstellung derartiger Hartschaumstoffe werden üblicherweise aromatische Polyisocyanate mit Polyolen, vorzugsweise Polyether- oder Polyesterpolyolen, in Gegenwart von Treibmitteln, Katalysatoren und Hilfs- und Zusatzstoffen zur Reaktion gebracht.

Die früher bevorzugt als Treibmittel verwendeten Fluorchlorkohlenwasserstoffe wie R11 wurden insbesondere wegen ihrer ozonzerstörenden Eigenschaften durch teilhalogenierte Fluorchlorkohlenwasserstoffe (HFCKW) wie R 141b (1,1,1-Dichlofluorethan), Fluorkohlenwasserstoffe (HFKW) sowie niedrigsiedende Alkane wie n-Pentan, iso-Pentan, Cyclopentan ersetzt.

Polyurethanhartschaumstoffe finden Verwendung bei der Herstellung von Verbund- oder Sandwichelementen oder bei der Ausschäumung von Hohlräumen in Haushaltsgeräten, wie Kühlmöbeln, beispielsweise Kühlschränken oder -truhen, oder von Heißwasserspeichern.

In der Vergangenheit wurde der nachwachsende Rohstoff Rizinusöl, ein in der chemischen Industrie vielfältig eingesetztes Triglycerid, bei der Herstellung von Polyurethanen mitverwendet. Rizinusöl ist hierfür geeignet, weil es über etwa drei Hydroxylgruppen pro Molekül verfügt. Rizinusöl ließ sich allerdings bisher nicht in großen Mengen (mehr als 20 Gew.-% des Polyolanteils der Rezeptur) bei der Herstellung von Polyurethanhartschäumen verwenden, weil seine OH-Zahl zu niedrig ist, und die erhaltenen Hartschäume insbesondere bei Rohdichten von unter 50 kg/m³ eine unzureichende mechanische Stabilität aufweisen. Der Einsatz von hohen Anteilen des nachwachsenden Rohstoffes Rizinusöl bei der Herstellung von Polyurethanhartschaumstoffen ist aber aus wirtschaftlichen und ökologischen Gründen von Interesse.

Aus Rizinusöl hergestellte Polyurethane werden darüber hinaus in FR-A-1 286 304 und DE-A-195 02 969 offenbart. Als weitere gegenüber Isocyanaten reaktive Wasserstoffatome aufweisende Polyolkomponente werden Anlagerungsprodukte von Alkylenoxiden an aliphatische Amine verwendet.

Es war die Aufgabe der Erfindung, ein Verfahren zur Herstellung von Polyurethanhartschaumstoffen aufzufinden, das den Einsatz von mehr als 20 Gew.-% Rizinusöl, bezogen auf den Polyolanteil der Formulierung, ermöglicht und zu technisch problemlos einsetzbaren Produkten führt.

Überraschenderweise wurde gefunden, daß diese Aufgabe durch die Verwendung der erfindungsgemäßen Polyolformulierungen gelöst werden können.

Gegenstand der Erfindung ist ein Verfahren zur Herstellung von Polyurethanhartschaumstoffen aus Polyolen und Polyisocyanaten, dadurch gekennzeichnet, daß der Polyurethanhartschaumstoff erhalten wird durch Umsetzung von
A) einer im Mittel mindestens zwei gegenüber Isocyanaten reaktive Wasserstoffatome aufweisenden Polyolkomponente, enthaltend
   1.
      a ) 20-80 Gew.% eines Additionsproduktes mit einer OH - Zahl von mindestens 500 aus primäre und/oder sekundäre Aminogruppen aufweisenden aromatischen Di- oder Polyaminen mit Alkylenoxiden
      b) 80-20 Gew.% Rizinusöl
         und/oder
      c) Reaktionsprodukte, die durch Reaktion der unter 1 a) genannten Additionsprodukte mit Rizinusöl erhalten werden.
   2. gegebenenfalls weitere, mindestens zwei gegenüber Isocyanaten reaktive Wasserstoffatome aufweisende Verbindungen wie Polyetherpolyole oder Polyesterpolyole, sowie
   3. gegebenenfalls Treibmittel,
   4. Wasser,
   5. Katalysatoren und
   6. gegebenenfalls Hilfs- und Zusatzstoffe
   mit
B) einem Polyisocyanat mit einem NCO - Gehalt von 20 bis 48 Gew.-%.

Die für die Komponenten Ala) und A2b) angegebenen Gew.-% beziehen sich auf den Polyolanteil der Komponente A), also auf die Summe der Komponenten A1) und A2).

Erfindungsgemäße Polyolformulierungen A) enthalten als Komponente 1a) Reaktionsprodukte aus primäre und/oder sekundäre Hydroxylgruppen aufweisenden aromatischen Di- oder Polyaminen mit Alkylenoxiden. Diese Reaktionsprodukte weisen OH-Zahlen von mindestens 500 auf. Als Alkylenoxide werden beispielsweise Ethylenoxid, Propylenoxid, Butylenoxid, Dodecyloxid oder Styroloxid, vorzugsweise Propylenoxid oder Ethylenoxid verwendet. Als Starterverbindungen werden aromatische Di- oder Polyamine verwendet, die mindestens eine primäre oder sekundäre Aminogruppe aufweisen, wie Phenylendiamine, Toluylendiamine (2,3-Toluylendiamin, 3,4-Toluylendiamin, 2,4-Toluylendiamin, 2,5-Toluylendiamin 2,6-Toluylendiamin oder Gemische der genannten Isomeren), 2,2'-Diaminodiphenylmethan, 2,4'-Diaminodiphenylmethan, 4,4'-Diaminodiphenylmethan oder Gemische dieser Isomeren.

Als Komponente 1a) wird bevorzugt ein Polyadditionsprodukt aus 2 bis 4 mol Alkylenoxiden, besonders bevorzugt 3 bis 3,8 mol, und ein Isomerengemisch aus 2,3- und 3,4-Toluylendiamin verwendet.

Als gegebenenfalls mitzuverwendende Ausgangskomponente (2) für die Schaumstoffherstellung finden Verbindungen mit mindestens zwei gegenüber Isocyanaten reaktionsfähigen Wasserstoffatomen von einem Molekulargewicht in der Regel von 200 bis 12500 g/mol Verwendung. Hierunter versteht man neben Aminogruppen, Thiolgruppen oder Carboxylgruppen aufweisende Verbindungen, vorzugsweise Hydroxygruppen aufweisende Verbindungen, insbesondere 2 bis 8 Hydroxylgruppen aufweisende Verbindungen, speziell solche vom Molekulargewicht 300 bis 2000, z. B. mindestens 2, in der Regel 2 bis 8 Hydroxylgruppen aufweisende Polyether oder Polyester sowie Polycarbonate oder Polyesteramide, wie sie für die Herstellung homogener und von zellförmigen Polyurethanen an sich bekannt sind und wie sie z. B. in der DE-A 28 32 253, Seiten 11-18, beschrieben werden.

Wasser kann in einer Menge von 1 bis 7 Gew.-%, bezogen auf die Summe der Komponenten A1) und A2), enthalten sein.

Als gegebenenfalls mitzuverwendende Treibmittel finden die üblicherweise für das Aufschäumen von Polyurethanhartschaumstoffen eingesetzten Treibmittel Verwendung. Beispiele für Treibmittel sind Wasser, Alkane wie n-Pentan, iso-Pentan, Gemische aus iso- und n-Pentan, Cyclopentan, Cyclohexan, Mischungen aus Butanisomeren und den genannten Alkanen, teilhalogenierte Fluorchlokohlenwasserstoffe wie 1,1,1-Dichlorfluorethan (R 141b), teilfluorierte Kohlenwasserstoffe wie 1,1,1,3,3,3-Hexafluorbutan (R 356) oder 1,1,1,3,3-Pentafluorpropan (R 245 fa). Bevorzugt werden Cyclopentan, n-Pentan, iso-Pentan einzeln oder als Gemisch, gegebenenfalls in der Abmischung mit Wasser, eingesetzt.

Üblicherweise wird das gegebenenfalls mit zu verwendende Treibmittel in einer Menge von 1 bis 20 Gew.-%, bezogen auf die Summe der Komponenten A1) und A2), eingesetzt.

Erfindungsgemäß werden die in der Polyurethanchemie an sich üblichen Katalysatoren in einer Menge von 0,1 bis 4 Gew.-%, bezogen auf die Summe der Komponenten A1) und A2), mitverwendet.

Als Isocyanat-Komponente B) sind z. B. aromatische Polyisocyanate möglich, wie sie z. B. von W. Siefken in Justus Liebigs Annalen der Chemie, 562, Seiten 75 bis 136, beschrieben werden, beispielsweise solche der Formel

Q(NCO)ₙ,

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 8 bis 15, vorzugsweise 8 bis 13, C-Atomen bedeuten, z. B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate", insbesondere modifizierte Polyisocyanate, die sich vom 2,4- und 2,6-Toluylendiisocyanat bzw. vom 4,4'- und/oder 2,4'-Diphenylmethandiisocyanat ableiten.

Verwendet werden können auch Prepolymere aus den genannten Isocyanaten und organischen Verbindungen mit mindestens einer Hydroxylgruppe, wie beispielsweise 1-4 Hydroxylgruppen aufweisende Polyol- oder Polyesterkomponenten vom Molekulargewicht 60 - 1400.

Als gegebenenfalls mitzuverwendende Hilfs- und Zusatzstoffe können Paraffine, Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, mitverwendet werden.

Weitere Beispiele von gegebenenfalls erfindungsgemäß mitzuverwendenden oberflächenaktiven Zusatzstoffen sind Schaumstabilisatoren, Zellregler, Reaktionsverzögerer, Stabilisatoren, flammhemmende Substanzen, Farbstoffen und Füllstoffen sowie fungistatisch und bakteriostatisch wirksamen Substanzen. Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z. B. auf den Seiten 121 bis 205, und 2. Auflage 1983, herausgegeben von G. Oertel (Carl Hanser Verlag, München) beschrieben.

Bei der Schaumherstellung kann die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Verfahrensweise ist z. B. aus den US-A 3 178 490 und 3 182 104 bekannt.

Selbstverständlich können auch Schaumstoffe durch Blockverschäumung oder nach dem an sich bekannten Doppeltransportbandverfahren hergestellt werden.

Die nach der Erfindung erhältlichen Hartschaumstoffe finden Anwendung z. B. im Bauwesen sowie für die Dämmung von Fernwärmerohren und Containern.

Gegenstand der Erfindung ist weiterhin die Verwendung der erfindungsgemäß hergestellten Hartschaumstoffe als Dämmstoff, z. B. Zwischenschicht für Verbundelemente und/oder zur Verstärkung mechanischer Konstruktionsteile.

Vorzugsweise wird das erfindungsgemäße Verfahren zur Ausschäumung von Hohlräumen von Kühl- und Gefriergeräten verwendet.

### Beispiele

### Polyol A :

In einem für Umsetzungen mit Alkylenoxiden geeignetem 100 1 Reaktor werden 9 kg eines Isomerengemisches aus 2,3- und 3,4-Toluylendiamin vorgelegt und nach gründlichem Spülen mit Stickstoff bei 90 bis 150°C und 2 bis 4 bar Stickstoff inerhalb von 2 Stunden 15 kg Propylenoxid (3,5 Mol/Mol Toluylendiamin) zudosiert. Nach 2 Stunden Nachreaktion wird das Reaktionsgemisch abgekühlt. Man erhält 24 kg eines Polyether mit folgenden analytischen Daten:
- OH-Zahl:: 605
- Viskosität:: 2200 mPas (75°C)

### Polyol B:

Sucrose, Ethylenglykol, Wasser gestarteter Polyether vom Molekulargewicht 350, erhalten durch anionische Polyaddition mit 1,2-Propylenoxid.

### Beispiel 1 (nicht erfindungsgemäß)

### Rezeptur für Polyurethanhartschaumstoff

### Komponente A

50 Gew. Tle. Rizinusöl
50 Gew. Tle. Polyol B
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 12 Gew.Teilen Cyclopentan und 100 Gew.Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Ende der Reaktion erhält man eine teilweise kollabierte, grobzellige, zähe Masse.

### Beispiel 2 (erfindungsgemäß)

### Rezeptur für Polyurethanhartschaumstoff

### Komponente A

50 Gew. Tle. Rizinusöl
50 Gew. Tle. Polyol A
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 14 Gew.Teilen Cyclopentan und 110 Gew.Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Aufschäumen erhält man einen feinzelligen Polyurethanhartschaumstoff.

### Beispiel 3 (erfindungsgemäß)

### Rezeptur für Polyurethanhartschaumstoff

### Komponente A

40 Gew. Tle. Rizinusöl
40 Gew. Tle. Polyol A
20 Gew. Tle Polyol B
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 14 Gew.Teilen Cyclopentan und 112 Gew.Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Aufschäumen erhält man einen feinzelligen Polyurethanhartschaumstoff.

Die Beispiele zeigen, daß bei hohen Einsatzmengen Rizinusöl (mehr als 20 Gew.-%, bezogen auf den Polyolanteil der Komponente A) nach dem erfindungsgemäßen Verfahren feinzellige Polyurethanhartschaumstoffe erhalten werden können.

## Patentansprüche

1. Verfahren zur Herstellung von Polyurethanhartschaumstoffen aus Polyolen und Polyisocyanaten, **dadurch gekennzeichnet, daß** der Polyurethanhartschaumstoff erhalten wird durch Umsetzung von
A) einer im Mittel mindestens zwei gegenüber Isocyanaten reaktive Wasserstoffatome aufweisenden Polyolkomponente, enthaltend
1.
a) 20-80 Gew.% eines Additionsproduktes mit einer OH - Zahl von mindestens 500 aus primäre und/oder sekundäre Aminogruppen aufweisenden aromatischen Di- oder Polyaminen mit Alkylenoxiden
b) 80-20 Gew.% Rizinusöl, wobei die Gew.-%-Angaben sich auf den Polyolanteil der Komponente A) beziehen,
und/oder
c) Reaktionsprodukte, die durch Reaktion der unter 1 a) genannten Additionsprodukte mit Rizinusöl erhalten werden;.
2. gegebenenfalls weitere, mindestens zwei gegenüber Isocyanaten reaktive Wasserstoffatome aufweisende Verbindungen wie Polyetherpolyole oder Polyesterpolyole, sowie
3. gegebenenfalls Treibmittel,
4. Wasser,
5. Katalysatoren und
6. gegebenfalls Hilfs- und Zusatzstoffe
mit
B) einem Polyisocyanat mit einem NCO - Gehalt von 20 bis 48 Gew.-%.

2. Verfahren gemäß Anspruch 1, **dadurch gekennzeichnet, daß** bei der Herstellung von Komponente 1 a) als primäre und/oder sekundäre Aminogruppen aufweisende aromatische Di- oder Polyamine ein Isomerengemisch aus 2,3-und 3,4-Toluylendiamin verwendet wird.

3. Verfahren gemäß einem der Ansprüche 1 oder 2, **dadurch gekennzeichnet, daß** als Komponente 1 a) ein Polyadditionsprodukt von 2-4 Mol Alkylenoxiden an ein Isomerengemisch aus 2,3- und 3,4-Toluylendiamin verwendet wird.

4. Verfahren gemäß einem der Ansprüche 1 bis 3, **dadurch gekennzeichnet, daß** als Treibmittel Cyclopentan, n-Pentan, iso-Pentan verwendet werden.

5. Verfahren gemäß einem der Ansprüche 1 bis 3, **dadurch gekennzeichnet, daß** als Treibmittel teilhalogenierte Fluorchlorkohlenwasserstoffe verwendet werden.

6. Verfahren gemäß Anspruch 1, **dadurch gekennzeichnet, daß** als Treibmittel Fluorkohlenwasserstoffe verwendet werden.

7. Verwendung der gemäß einem der Ansprüche 1 bis 6 erhältlichen Schaumstoffe als Dämmstoffe und/oder zur Verstärkung von mechanischen Konstruktionsteilen.

8. Verfahren zur Ausschäumung von Hohlräumen, **dadurch gekennzeichnet, daß** man einen Polyurethanhartschaumstoff gemäß einem der Ansprüche 1 bis 6 erzeugt.

## Claims

1. Process for producing polyurethane rigid foams from polyols and polyisocyanates, **characterised in that** the polyurethane rigid foam is obtained by reacting
A) A polyol component having on average at least two hydrogen atoms that are reactive with respect to isocyanates, said polyol component containing
1.
a) 20 - 80 wt.% of an addition product with an OH number of at least 500 formed from aromatic diamines or polyamines containing primary and/or secondary amino groups and alkylene oxides
b) 80 - 20 wt.% of castor oil, the percentage proportions referring to the polyol fraction of the component A)
and/or
c) reaction products that are obtained by reacting the addition products mentioned in 1a) with castor oil;
2. optionally further compounds having at least two hydrogen atoms that are reactive with respect to isocyanates, such as polyether polyols or polyester polyols,
3. optionally blowing agent,
4. water,
5. catalysts, and
6. optionally auxiliaries and additives,
with
B) a polyisocyanate with a NCO content of 20 to 48 wt.%.

2. Process according to claim 1, **characterised in that** in the preparation of component 1a), an isomeric mixture of 2,3-toluylenediamine and 3,4-toluylenediamine is used as aromatic diamine or polyamine containing primary and/or secondary amino groups.

3. Process according to one of claims 1 and 2, **characterised in that** a polyaddition product of 2 to 4 moles of alkylene oxides and an isomeric mixture of 2,3-toluylenediamine and 3,4-toluylenediamine is used as component 1a).

4. Process according to one of claims 1 to 3, **characterised in that** cyclopentane, n-pentane or iso-pentane is used as blowing agent.

5. Process according to one of claims 1 to 3, **characterised in that** partially halogenated fluorochlorohydrocarbons are used as blowing agent.

6. Process according to claim 1, **characterised in that** fluorohydrocarbons are used as blowing agent.

7. Use of the foams obtainable according to one of claims 1 to 6 as insulating materials and/or to reinforce mechanical structural parts.

8. Process for the foaming of cavities, **characterised in that** a polyurethane rigid foam is produced according to one of claims 1 to 6.

## Revendications

1. Procédé de préparation de mousses rigides de polyuréthanne à partir de polyols et polyisocyanates, **caractérisé en ce que** la mousse rigide de polyuréthanne est obtenue par réaction de
A) un composant polyol présentant en moyenne au moins deux atomes d'hydrogène réactifs avec les isocyanates, contenant
1.
a) 20-80% en poids d'un produit d'addition avec un indice OH d'au moins 500, de di- et/ou polyamines aromatiques présentant des radicaux amino primaires et/ou secondaires, avec des oxydes d'alcoylène,
b) 80-20% en poids d'huile de ricin, où les données en % en poids reposent sur la fraction de polyol du composant A),
et/ou
c) les produits de réaction, qui sont obtenus par réaction des produits de réaction indiqués sous 1. a) avec l'huile de ricin ;
2. le cas échéant, d'autres composés présentant au moins deux atomes d'hydrogène réactifs avec les isocyanates, comme des polyéther-polyols ou des polyester-polyols, ainsi que
3. le cas échéant, un agent moussant,
4. de l'eau,
5. des catalyseurs, et
6. le cas échéant, des auxiliaires et additifs,
avec
B) un polyisocyanate avec une teneur en NCO allant de 20 à 48% en poids.

2. Procédé suivant la revendication 1, **caractérisé en ce que** lors de la préparation du composant 1.a), on utilise comme di- ou polyamines aromatiques présentant des radicaux amino primaires et/ou secondaires, un mélange d'isomères de 2,3- et de 3,4-toluylènediamine.

3. Procédé suivant l'une quelconque des revendications 1 ou 2, **caractérisé en ce que** comme composant 1.a), on utilise un produit de polyaddition de 2-4 moles d'oxyde d'alcoylène sur un mélange d'isomères de 2,3- et de 3,4-toluylènediamine.

4. Procédé suivant l'une quelconque des revendications 1 à 3, **caractérisé en ce que** l'on utilise comme agent moussant, le cyclopentane, le n-pentane, l'isopentane.

5. Procédé suivant l'une quelconque des revendications 1 à 3, **caractérisé en ce que** comme agent moussant, on utilise un hydrocarbure fluorochloré partiellement halogéné.

6. Procédé suivant la revendication 1, **caractérisé en ce que** l'on utilise comme agent moussant, un hydrocarbure fluoré.

7. Utilisation de matières moussées suivant l'une quelconque des revendications 1 à 6, comme matériau isolant et/ou pour le renforcement de parties de constructions mécaniques.

8. Procédé de moussage de corps creux, **caractérisé en ce que** l'on produit une mousse rigide de polyuréthanne suivant l'une quelconque des revendications 1 à 6.
